# EUROPEAN PATENT APPLICATION

(11) **EP 4 701 200 A1**
(43) Date of publication of application: **25.02.2026**
(21) Application number: 25185622.5
(22) Date of filing: 26.06.2025
(51) Int. Cl.: H04N 21/2343, H04N 21/24, H04N 21/4402

(54) **IMAGE DATA TRANSCEIVING SYSTEM AND IMAGE DATA TRANSCEIVING METHOD**

(30) Priority: 22.08.2024 TW 113131606
(71) Applicant: Realtek Semiconductor Corp., HsinChu 30076 (TW)
(72) Inventor: Huang, Yueh-Hsing, 30076 HsinChu (TW)
(74) Representative: Straus, Alexander

(57) **Abstract**

An image data transceiving system (100), including: a transmitting device (101), configured to output a first target image stream (TIS_1) including a plurality of first target images (I_T1); and a receiving device (103), configured to decode the first target image stream (TIS_1) to obtain a plurality of second target images (I_T2). A reference image stream (RIS) is generated according to the first target image stream (TIS_1), and includes first reference images (I_R1) generated by the transmitting device (101) or second reference images (I_R2) generated by the receiving device (103). Data amount of a first reference image (I_R1) is less than that of a corresponding first target image (I_T1), and data amount of a second reference image (I_R2) is less than that of a corresponding second target image (I_T2). The transmitting device (101) receives the reference image stream (RIS) through the receiving device (103).

## Description

### Field of the Invention

This invention relates to an image data transceiving system and an image data transceiving method capable of determining whether transmitted image data is correctly received or not.

### Background of the Invention

In recent years, image data transceiving systems have become popular. The image data transceiving system can be used to transmit image data to a display device capable of displaying images. However, in long-distance image transmission, it is difficult for the user at the transmitting end to confirm whether the transmitted image is correctly received by the receiving end. For example, in a remote conference, one of the users A wants to share the image of the conference document to other users for viewing. However, after user A uses the sharing function of the remote conferencing software, he usually cannot know whether other users have correctly received the images of the conference documents, and only can confirm by asking other users. For another example, when a video wall is used, the image displayed on the video wall is usually composed of multiple partial images. If the control device is far away from the video wall or in a different space, it will be difficult to determine whether the video wall correctly displays all partial images.

### Summary of the Invention

The invention aims at providing an image data transceiving system and an image data transceiving method which can help determine whether images are correctly displayed.

This is achieved by a system, and a method, according to claims 1 and 9 respectively. The dependent claims pertain to corresponding further developments and improvements.

As will be seen more clearly from the detailed description below, the claimed image data transceiving system comprises: a transmitting device, configured to output a first target image stream, wherein the first target image stream comprises a plurality of first target images; and a receiving device, configured to receive the first target image stream and to decode the first target image stream to obtain a plurality of second target images. The transmitting device or the receiving device generates a reference image stream according to the first target image stream. The reference image stream comprises a plurality of first reference images generated by the transmitting device or a plurality of second reference images generated by the receiving device. Data amount of the first reference images is less than data amount of corresponding ones of the first target images, and data amount of the second reference images is less than data amount of corresponding ones of the corresponding second target images. The transmitting device further receives the reference image stream through the receiving device.

The claimed image data transceiving method is applied to an image transceiving system comprising a transmitting device and a receiving device, and comprises: (a) the transmitting device outputting a first target image stream, wherein the first target image stream comprises a plurality of first target images; (b) the receiving device receiving the first target image stream and decoding the first target image stream to obtain a plurality of second target images; (c) the transmitting device or the receiving device generating a reference image stream according to the first target image stream, wherein the reference image stream comprising a plurality of first reference images generated by the transmitting device or a plurality of second reference images generated by the receiving device, wherein data amount of the first reference images is less than data amount of corresponding ones of the first target images and data amount of the second reference images is less than data amount of corresponding ones of the corresponding second target images; and (d) the transmitting device receiving the reference image stream through the receiving device.

In view of the embodiments, when transmitting images, a reference image with a smaller amount of data can be generated to the transmitting end. This allows the transmitting end to confirm whether the display device connected to the receiving device displays images which has correct image content.

### Brief Description of the Drawings

In the following, the invention is further illustrated by way of example, taking reference to the following drawings. Thereof:
- FIG.1: is a block diagram illustrating an image transceiving system according to an embodiment of the present invention.
- FIG.2: is a block diagram illustrating an image transceiving system according to another embodiment of the present invention.
- FIG.3: is a more detailed block diagram of a transmitting device according to one embodiment of the present invention.
- FIG.4: is a more detailed block diagram of a receiving device according to one embodiment of the present invention.
- FIG.5: is a schematic diagram illustrating an embodiment which uses a single transmitting device and a single receiving device.
- FIG.6: is a schematic diagram illustrating an embodiment which uses multiple transmitting devices and a single receiving device.
- FIG.7: is a schematic diagram illustrating an embodiment which uses multiple transmitting devices and multiple receiving devices.
- FIG.8: is a flow chart illustrating an image transceiving method according to one embodiment of the present invention.

### Detailed Description

In the following descriptions, several embodiments are provided to explain the concept of the present application. The term "first", "second", "third" in following descriptions are only for the purpose of distinguishing different one elements, and do not mean the sequence of the elements. For example, a first device and a second device only mean these devices can have the same structure but are different devices.

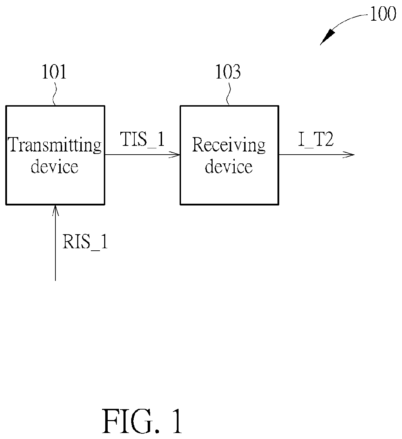

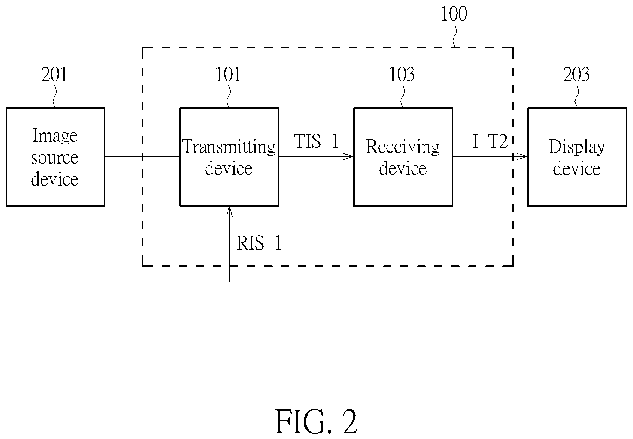

FIG.1 and FIG.2 are block diagrams illustrating image transceiving systems according to different embodiments of the present invention. As shown in FIG. 1, the image transceiving system 100 comprises a transmitting device 101 and a receiving device 103. The transmitting device 101 is configured to output a first target image stream TIS_1, which comprises a plurality of first target images. The receiving device 103 is configured to receive the first target image stream TIS_1 and to decode the first target image stream TIS_1 to obtain a plurality of second target images I_T2. The transmitting device 101 or the receiving device 103 generates a reference image stream RIS according to the first target image stream TIS_1. The reference image stream RIS comprises a plurality of first reference images or a plurality of second reference images.

In one embodiment, data amount of each of the first reference image is respectively smaller than the data amount of a corresponding first target image, or the data amount of the second reference image is smaller than the data amount of a corresponding second target image. The first target image, the first reference image and the second reference image are not shown in FIG 1 and FIG.2, but will be described in detail in following embodiments. In the embodiment of FIG. 1, the transmitting device 101 further receives the reference image stream RIS through the receiving device 103. The receiving device 103 can transmit the reference image stream RIS to the transmitting device 101 through wired transmission or wireless transmission, as shown in FIG. 1. Alternatively, the receiving device 103 can use other methods, such as broadcasting the reference image stream RIS, so that the transmitting device 101 can receive the reference image stream RIS.

The image transceiving system 100 shown in FIG. 1 can be used in various situations requiring image transmission and reception. For example, in the embodiment of FIG.2, the transmitting device 101 receives image data from an image source device 201 to generate the first target image stream TIS_1. That is, the image source device 201 provides the first target images in the first target image stream TIS_1. The receiving device 103 transmits the second target image I_T2 to a display device 203 so that the display device 203 displays the second target image I_T2. The image source device 201 can be any device that can provide image data, such as a DVD player, computer, game console, etc. The display device 203 can be any display device that can display images, such as a screen, a TV, a video wall, etc.

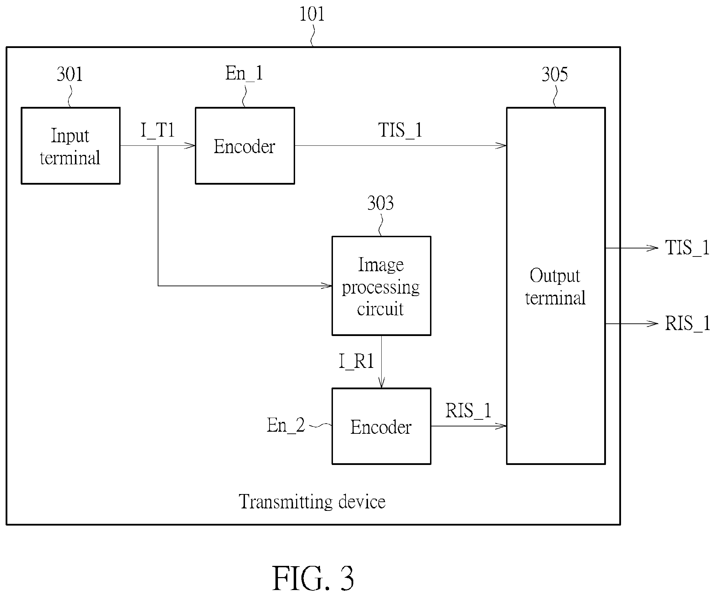

The following embodiments will describe detailed structures of the transmitting device 101 and the receiving device 103. FIG.3 is a more detailed block diagram of a transmitting device according to one embodiment of the present invention. In the embodiment of FIG. 3, the reference image stream RIS is generated by the transmitting device 101. However, please note that the transmitting device of the present invention is not limited to the structure shown in FIG. 3. As shown in FIG. 3, the transmitting device 101 comprises an input terminal 301, an image processing circuit 303, an output terminal 305 and encoders En_1 and En_2. The image processing circuit 303 and the encoders En_1 and En_2 can be implemented through hardware or hardware plus firmware. For example, the image processing circuit 303 and the encoders En_1 and En_2 can be independent circuits, or implemented by a processing circuit executing a program. The image processing circuit, encoder and decoder in the receiving device 103 may also follow simultaneous rules.

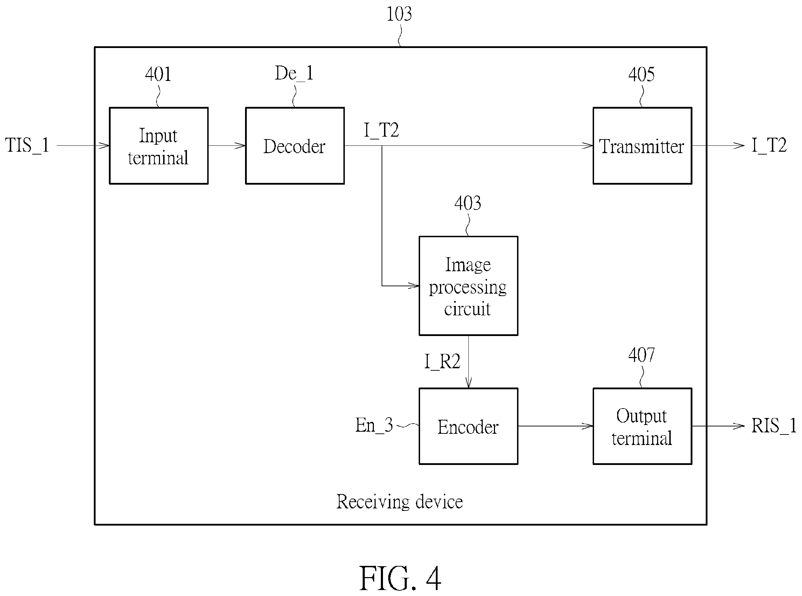

The input terminal 301 is configured to receive a plurality of first target images I_T1 and transmit them to the encoder En_1 and the image processing circuit 303. The encoder En_1 is configured to encode the first target image I_T1 to the first target image stream TIS_1. The image processing circuit 303 performs image processing to the first target image I_T1 respectively to reduce the data amount of the first target image I_T1, to generate a plurality of corresponding first reference images I_R1. For example, if the first target image I_T1 comprises three first target images I_T11, I_T12 and I_T13. The image processing circuit 303 performs image processing to the first target image I_T11 to generate the first reference image I_R11, performs image processing to the first target image I_T12 to generate the first reference image I_R12, and performs image processing to the first target image I_T13 to generate the first reference image I_R13. Then the corresponding first reference images of the first target images I_T11, I_T12 and I_T13 are I_R11, I_R12 and I_R13 respectively. The encoder En_2 is configured to encode the first reference image I_R1 to generate the reference image stream RIS. The output terminal 305 is configured to output the first target image stream TIS_1 and the reference image stream RIS. Please also note that in the embodiment of FIG. 4, the output terminal 305 uses different transmission lines to transmit the first reference image I_R1 and the reference image stream RIS. However, the output terminal 305 can also use the same transmission line to transmit the first reference image I_R1 and the reference image stream RIS. After receiving the reference image stream RIS, the receiving device 103 can send it back to the transmitting device 101 in the aforementioned manner.

As mentioned above, the data amount of the first reference image may be smaller than the data amount of the corresponding first target image. This effect can be achieved through a variety of methods. In one embodiment, the first resolution of the first reference image I_R1 is smaller than the second resolution of the first target image I_T1, or the first frame rate of the first reference image I_R1 is smaller than the second frame rate of the first target image I_T1. In another embodiment, the first image information comprised in the first reference image I_R1 is less than the second image information comprised in the corresponding first target image I_T1. For example, the first target images I_T1 are both color images and the first reference images I_R1 are both black and white images. The image processing circuit 303 may have different structures or use different algorithms corresponding to the data amount reduction method used.

FIG.4 is a more detailed block diagram of a receiving device according to one embodiment of the present invention. In the embodiment of FIG. 4, the reference image stream RIS is generated by the receiving device 103 instead of the transmitting device 101. Therefore, in the embodiment of FIG. 4, the transmitting device 101 may not comprise the image processing circuit 303 and the encoder En_2. Similarly, if the reference image stream RIS is generated by the transmitting device 101, the receiving device 103 may not comprise the image processing circuit 403 and the encoder En_3. As shown in FIG. 4, the receiving device 103 comprises an input terminal 401, an image processing circuit 403, a transmitter 405, an output terminal 407, a decoder De_1 and an encoder En_3. The input terminal 401 is configured to receive the first target image stream TIS_1 output by the transmitting device 101. The decoder De_1 is configured to decode the first target image stream TIS_1 to generate a plurality of second target images I_T2. Similar to the aforementioned image processing circuit 303, the image processing circuit 403 can have different structures or use different algorithms corresponding to the data amount reduction method used to reduce the data amount of the corresponding second target image I_T2, to generate the second reference image I_R2. The transmitter 405 is configured to transmit the second target image I_T2. The encoder En_3 is configured to encode the second reference image I_R2 to generate the reference image stream RIS. The output terminal 407 is configured to output the reference image stream RIS.

As mentioned above, the data amount of the second reference image I_R2 may be smaller than the data amount of the corresponding second target image I_T2. For more detail, in one embodiment, the third resolution of the second reference image I_R2 is smaller than the fourth resolution of the second target image I_T2, or the third frame rate of the second reference image I_R2 is smaller than the fourth frame rate of the second target image I_T2. In another embodiment, the third image information contained in the second reference image I_R2 is less than the fourth image information contained in the corresponding second target image I_T2. For example, the second target images I_T2 are both color images and the second reference images I_R2 are both black and white images.

If the transmitting device 101 and the receiving device 103 operate normally, the second target image I_T2 is the same image as the first target image I_T1. Therefore, if the transmitter 405 transmits the second target image I_T2 to a display device that can display the image, then the display device can correctly display the first target image I_T1 received by the transmitting device 101. The second target image I_T2 may also be processed by other image processing, such as contrast enhancement, and then be sent to the display device for display. In such case, the image content of the second reference image I_R2 will also have correct image content corresponding to the second target image I_T2. On the contrary, if the receiving device 103 does not receive the first target image stream TIS_1 correctly, or fails to decode the first target image stream TIS_1 correctly, the second target image I_T2 will contain wrong image content. In this case, the second reference image I_R2 also corresponds to the second target image I_T2 thus has wrong image content.

The above example is based on the example in which the receiving device 103 generates the reference image stream RIS. However, the example in which the transmitting device 101 generates the reference image stream RIS can also follow the same rules. In other words, if the transmitting device 101 fails to output the correct first target image stream TIS_1, the transmitting device 101 will also receive the reference image stream RIS with incorrect image content. Therefore, whether the transmitting device 101 and the receiving device 103 have correctly processed the first target image stream TIS_1 can be determined based on the image content in the reference image stream RIS received by the transmitting device 101. Briefly, when the image transmission system of the present invention transmits the target image to a display device connected to the receiving device 103, it will return a reference image with less data amount to the transmitting device 101 for determining whether the target image is correctly displayed.

For convenience of explanation, in the following embodiments, the transmitting device 101 fails to correctly output the first target image stream TIS_1, or the receiving device 103 does not correctly receive the first target image stream TIS_1, or does not correctly decode the first target image stream TIS_1. These operations are briefly described as "the transmitting device 101 and the receiving device 103 failed to correctly process the first target image stream TIS_1" in the following description.

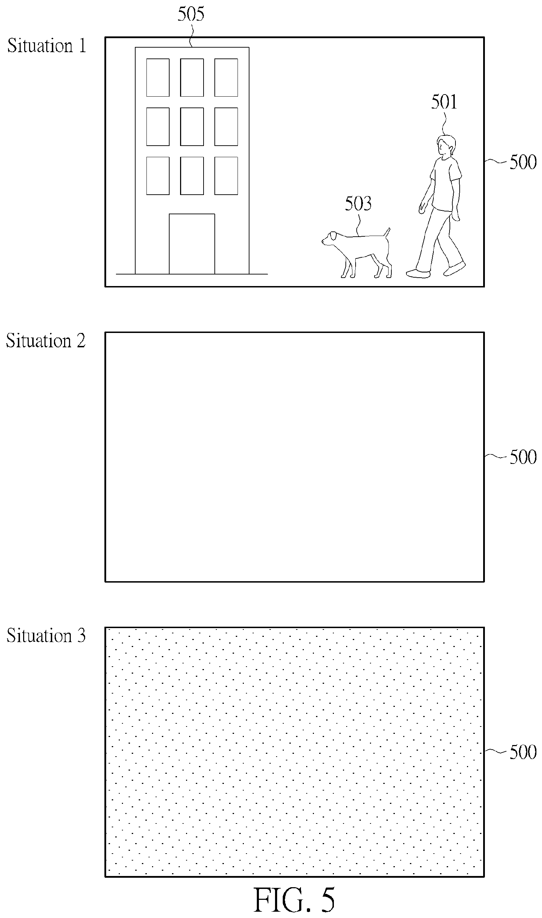

FIG.5 is a schematic diagram illustrating an embodiment which uses a single transmitting device and a single receiving device. In the embodiment of FIG. 5, the display device 500 is connected to the transmitting device 101 and is used for displaying the first reference image I_R1 or the second reference image I_R2 in the reference image stream RIS received by the transmitting device 101. For the convenience of explanation, the first reference image I_R1 or the second reference image I_R2 will be simply referred to as the reference image in the following description. As shown in FIG. 5, in situation 1, the transmitting device 101 and the receiving device 103 correctly process the first target image stream TIS_1, so the display device connected to the receiving device 103 can correctly display the first target image I_T1. Correspondingly, the display device 500 will also display the correct reference image. The reference image and the first target image I_T1 may have the same image content, such as the image features (person 501, dog 503 and house 505) shown in FIG. 5, but have less data amount or image information. However, please note that the reference image may be displayed in only a part of the area of the display device 500 rather than limited to the entire area of the display device 500.

In the situations 2 and 3, the transmitting device 101 and the receiving device 103 failed to correctly process the first target image stream TIS_1, so the display device connected to the receiving device 103 displayed a blank image and a snowflake image respectively, and the display device 500 will also display a blank image or a snowflake image accordingly. Therefore, the user can determine whether the receiving device 103 provides correct images to the connected display device according to the image displayed by the display device 500. Such determination can be made through a variety of methods. In one embodiment, the user is allowed to directly observe the image displayed by the display device 500 to make the determination. In another embodiment, software is used to compare the reference image received by the transmitting device 101 with the corresponding first target image I_T1 to determine whether the image contents are consistent or similar. In this case, the reference image received by the transmitting device 101 may not be displayed.

In the above-mentioned embodiments, a single transmitting device and a single receiving device are used for illustration. However, the image transceiving system provided by the present invention can also be applied to a single transmitting device and multiple receiving devices. In this example, the transmitting device transmits the same image to different receiving devices, and the display device 500 can receive reference images corresponding to different receiving devices and display them in different areas. Alternatively, the user can switch between different receiving devices to display corresponding reference images. Through these methods, users can confirm whether the image has been received and decoded correctly.

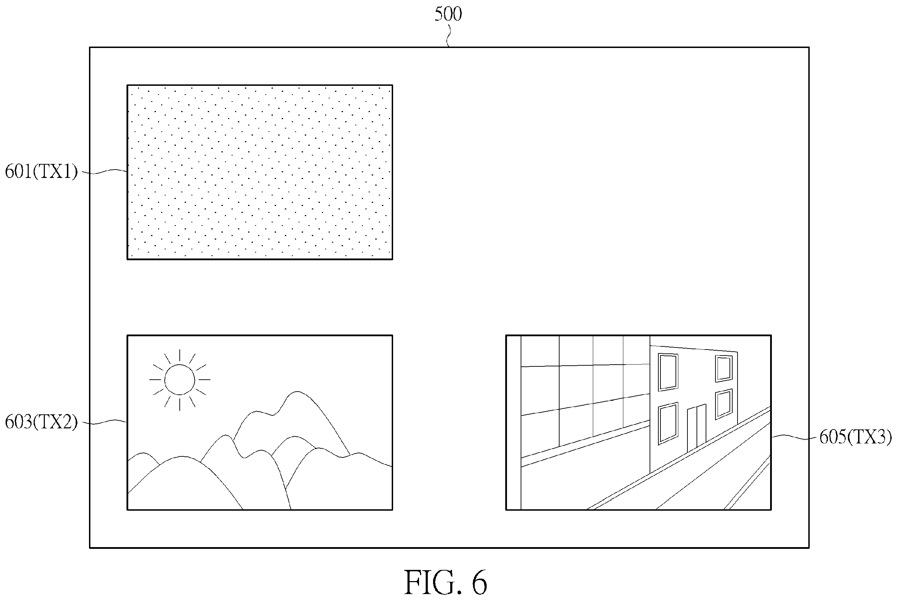

The image transceiving system provided by the present invention can also be applied to multiple transmitting devices and a single receiving device. FIG.6 is a schematic diagram illustrating an embodiment which uses multiple transmitting devices and a single receiving device. As shown in FIG. 6, the display device 500 displays an image 601, an image 603 and an image 605. In this embodiment, different transmitting devices TX1, TX2 and TX3 transmit audio and video data from different audio and video source devices to the same receiving device. Images 601, 603 and 605 are reference images generated based on these audio and video data.

Images from different transmitting devices will be synthesized on the same image by the receiving device 103, so the image 601, the image 603 and the image 605 will also be synthesized on the same image. In such case, the display device 500 in FIG. 6 can simultaneously display reference images corresponding to different transmitting devices TX1, TX2, and TX3. In the embodiment of FIG. 6, the image 601 is a snowflake image, so the transmitting device TX1 or the receiving device does not process the image correctly and needs to be confirmed and repaired. Images 603 and 605 are normal images, so the transmitting devices TX2, TX3 and the receiving device have processed the images correctly.

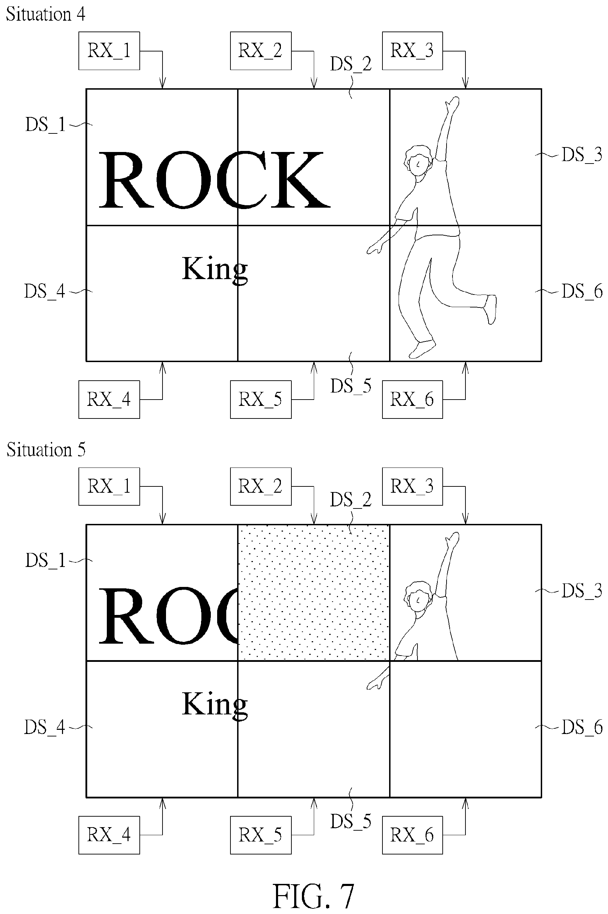

FIG.7 is a schematic diagram illustrating an embodiment which uses multiple transmitting devices and multiple receiving devices. This embodiment is used in a multi-screen display system, such as a video wall. As shown in FIG. 7, the receiving devices RX_1, RX_2, RX_3, RX_4, RX_5 and RX_6 respectively receive the images transmitted by a plurality of transmitting devices, and the display devices DS_1, DS_2, DS_3, DS_4, DS_5 and DS_6 respectively receive the reference images RX_1, RX_2, RX_3, RX_4, RX_5 and RX_ 6 corresponding to different receiving devices. In FIG. 7, the image transmitted by each transmitting device is only a part of the image to be displayed, and all the images are combined to form a complete image to be displayed. In situation 4 in FIG. 7, all receiving devices RX_1... RX6 and corresponding transmitting devices correctly process the images transmitted by each corresponding transmitting device, so the display devices DS_1... DS_6 display the correct partial image to be displayed accordingly, and then form a complete image to be displayed.

However, in situation 5 of FIG. 7, the receiving devices RX_5 and RX_6 or their corresponding transmitting devices do not correctly process the images transmitted by their corresponding transmitting devices, so the display devices connected to them cannot display the correct images. In such case, the display devices DS_2 and DS_6 are also unable to display correct images. Therefore, the user who controls the multi-screen display system can take appropriate inspection or maintenance methods based on the image displayed on each display device.

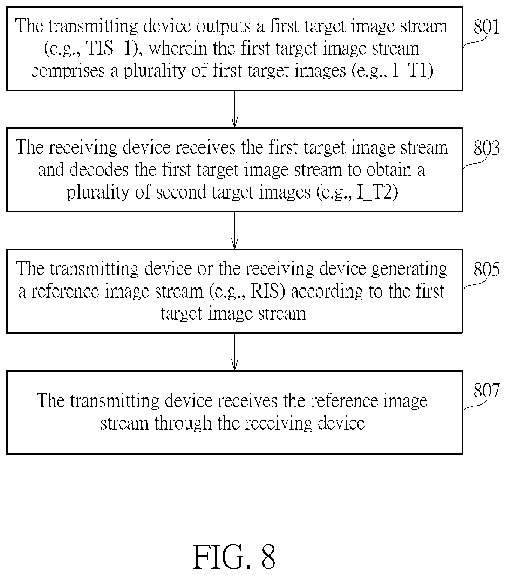

In view of the foregoing embodiments, an image data transceiving method can be obtained, which is used in an image transceiving system comprising a transmitting device and a receiving device, such as the image transceiving system 100 shown in FIG. 1. FIG.8 is a flow chart illustrating an image transceiving method according to one embodiment of the present invention, which comprises the following steps:

### Step 801

The transmitting device outputs a first target image stream (e.g., TIS_1), wherein the first target image stream comprises a plurality of first target images (e.g., I_T1).

### Step 803

The receiving device receives the first target image stream and decodes the first target image stream to obtain a plurality of second target images (e.g., I_T2)

### Step 805

The transmitting device or the receiving device generates a reference image stream (e.g., RIS) according to the first target image stream.

The reference image stream comprises a plurality of first reference images generated by the transmitting device or a plurality of second reference images generated by the receiving device. Data amount of the first reference images is less than data amount of corresponding ones of the first target images and data amount of the second reference images is less than data amount of corresponding ones of the corresponding second target images.

### Step 807

The transmitting device receives the reference image stream through the receiving device.

In view of the above-mentioned embodiments, when transmitting images, a reference image with a smaller amount of data can be generated to the transmitting end. This allows the transmitting end to confirm whether the display device connected to the receiving device displays images which has correct image content.

## Claims

1. An image data transceiving system (100), comprising:
a transmitting device (101), configured to output a first target image stream (TIS_1), wherein the first target image stream (TIS_1) comprises a plurality of first target images (I_T1); and
a receiving device (103), configured to receive the first target image stream (TIS_1) and to decode the first target image stream (TIS_1) to obtain a plurality of second target images (I_T2);
**characterized in that** the transmitting device (101) or the receiving device (103) generates a reference image stream (RIS) according to the first target image stream (TIS_1);
wherein the reference image stream (RIS) comprises a plurality of first reference images (I_R1) generated by the transmitting device (101) or a plurality of second reference images (I_R2) generated by the receiving device (103);
wherein data amount of the first reference images (I_R1) is less than data amount of corresponding ones of the first target images (I_T1), and data amount of the second reference images (I_R2) is less than data amount of corresponding ones of the corresponding second target images (I_T2);
wherein the transmitting device (101) further receives the reference image stream (RIS) through the receiving device (103).

2. The image data transceiving system (100) of claim 1, **characterized in that** first resolutions of the first reference images (I_R1) are smaller than second resolutions of first target images (I_T1), or frame rates of the first reference images (I_R1) are smaller than second frame rates of the first target images (I_T1).

3. The image data transceiving system (100) of claim 1, **characterized in that** first image information contained in the first reference images (I_R1) is less than second image information contained in the corresponding ones of the first target images (I_T1).

4. The image data transceiving system (100) of claim 3, **characterized in that** the first reference images (I_R1) are black and white images, and the first target images (I_T1) are color images.

5. The image data transceiving system (100) of claim 1, **characterized in that** the transmitting device (101) performs image processing on the first target images (I_T1) respectively to reduce the data amount of the first target images (I_T1) to generate corresponding ones of the first reference images (I_R1).

6. The image data transceiving system (100) of claim 1, **characterized in that** the receiving device (103) decodes the first target image stream (TIS_1) to generate a plurality of second target images (I_T2), and performs image processing on the second target images (I_T2) to reduce the data amount of the second target images (I_T2) to generate corresponding ones of the second reference images (I_R2).

7. The image data transceiving system (100) of claim 1, **characterized in that** the transmitting device (101) receives image data from an image source device (201) to generate the first target image stream (TIS_1) and the reference image stream (RIS), and the receiving device (103) transmits the second target images (I_T2) to a display device (203) so that the display device (203) displays the second target images (I_T2).

8. The image data transceiving system (100) of claim 1, **characterized in that** the receiving device (103) broadcasts the reference image stream (RIS), or uses wireless transmission or wired transmission to transmit the reference image stream (RIS) to the transmitting device (101).

9. An image data transceiving method, applied to an image transceiving system (100) comprising a transmitting device (101) and a receiving device (103), comprising:
(a) the transmitting device (101) outputting a first target image stream (TIS_1), wherein the first target image stream (TIS_1) comprises a plurality of first target images (I_T1) {801};
(b) the receiving device (103) receiving the first target image stream (TIS_1) and decoding the first target image stream (TIS_1) to obtain a plurality of second target images (I_T2) {803};
and **characterized by**:
(c) the transmitting device (101) or the receiving device (103) generating a reference image stream (RIS) according to the first target image stream (TIS_1), wherein the reference image stream (RIS) comprising a plurality of first reference images (I_R1) generated by the transmitting device (101) or a plurality of second reference images (I_R2) generated by the receiving device (103), wherein data amount of the first reference images (I_R1) is less than data amount of corresponding ones of the first target images (I_T1) and data amount of the second reference images (I_R2) is less than data amount of corresponding ones of the corresponding second target images (I_T2) {805}; and
(d) the transmitting device (101) receiving the reference image stream (RIS) through the receiving device (103) {807}.

10. The image data transceiving method of claim 9, **characterized in that** first resolutions of the first reference images (I_R1) are smaller than second resolutions of first target images (I_T1), or frame rates of the first reference images (I_R1) are smaller than second frame rates of the first target images (I_T1), and first image information contained in the first reference images (I_R1) is less than second image information contained in the corresponding ones of the first target images (I_T1).

11. The image data transceiving method of claim 10, **characterized in that** the first reference images (I_R1) are black and white images, and the first target images (I_T1) are color images.

12. The image data transceiving method of claim 9, **characterized in that** the step (c) comprises:
the transmitting device (101) performing image processing on the first target images (I_T1) respectively to reduce the data amount of the first target images (I_T1) to generate corresponding ones of the first reference images (I_R1).

13. The image data transceiving method of claim 9, **characterized in that** the step (c) comprises:
the receiving device (103) decoding the first target image stream (TIS_1) to generate a plurality of second target images (I_T2), and performing image processing on the second target images (I_T2) to reduce the data amount of the second target images (I_T2) to generate corresponding ones of the second reference images (I_R2).

14. The image data transceiving method of claim 9, further **characterized by**:
the transmitting device (101) receiving image data from an image source device (201) to generate the first target image stream (TIS_1) and the reference image stream (RIS); and
the receiving device (103) transmitting the second target images (I_T2) to a display device (203) so that the display device (203) displays the second target images (I_T2).

15. The image data transceiving method of claim 9, **characterized in that** in the step (d), the receiving device (103) broadcasts the reference image stream (RIS), or uses wireless transmission or wired transmission to transmit the reference image stream (RIS) to the transmitting device (101).
